# EUROPÄISCHE PATENTSCHRIFT

(11) **EP 0 718 365 B1**
(45) Veröffentlichungstag und Bekanntmachung des Hinweises auf die Patenterteilung: **13.03.2002**
(21) Anmeldenummer: 95120098.9
(22) Anmeldetag: 19.12.1995
(51) Int. Cl.: C08L 57/10, C08L 63/00, C09D 157/10, C09D 163/00

(54) **Bindemittelzusammensetzung, diese enthaltende Überzugsmittel und deren Verwendung**
Binder composition, coatings therewith and their use
Composition de liant, de revêtement la contenant et utilisation

(30) Priorität: 24.12.1994 DE 4446770; 06.09.1995 DE 19532873
(43) Veröffentlichungstag der Anmeldung: 26.06.1996
(73) Patentinhaber: E.I. DU PONT DE NEMOURS AND COMPANY, Wilmington Delaware 19898 (US)
(72) Erfinder: Becker, Heinz Dietholf, 53121 Bonn (DE); Bremer, Gerhard, Dr., D-50226 Frechen (DE); Flosbach, Carmen, Dr., D-42115 Wuppertal (DE); Kerber, Hermann, D-42349 Wuppertal (DE); Schubert, Walter, Dr., D-42349 Wuppertal (DE); Stephan, Werner, D-42111 Wuppertal (DE); Wabbels, Jörg, D-45527 Hattingen (DE)
(74) Vertreter: Gille Hrabal Struck Neidlein Prop Roos

(56) Entgegenhaltungen:
- EP-A- 0 160 824
- EP-A- 0 203 296
- EP-A- 0 224 158
- EP-A- 0 326 723
- EP-A- 0 481 345
- DE-A- 3 713 511
- DE-A- 3 932 517

## Beschreibung

Die Erfindung betrifft ein Zwei-Komponenten-Bindemittel, das für Überzugsmittelzusammensetzungen geeignet ist.

In der DE-A-37 13 511 werden Zweikomponenten-Lackbindemittel auf der Basis von Methacrylsäure-2-acetoacetoxy-ethylestern sowie deren Umsetzungsprodukte mit Aldehyden oder Ketonen und Aminen beschrieben. Diese Systeme härten bei Raumtemperatur jedoch sehr langsam.

In der EP-A-0 160 824 werden Zweikomponenten-Lacke auf der Basis von Umsetzungsprodukten von Verbindungen mit CH-aciden Gruppen mit olefinisch ungesättigten Verbindungen beschrieben. Diese Systeme härten bei Raumtemperatur unzureichend und sind daher beispielsweise für Reparaturlackierungen auf dem Kraftfahrzeugsektor in Werkstätten, die keine Einbrennvorrichtungen haben, nicht geeignet.

Durch Erwärmen härtbare Zweikomponenten-Überzugsmittel auf der Basis CH-acider Verbindungen und von Verbindungen mit mindestens zwei α,β-ungesättigten Gruppen werden auch in der EP-A-0 224 158 beschrieben. Als CH-acide Verbindungen werden dort Methantricarbonsäureamid-Gruppenenthaltende Verbindungen eingesetzt. Auch diese Systeme härten bei Raumtemperatur unzureichend.

In der EP-A-0 203 296 wird ein isocyanatfreies Zweikomponenten-Bindemittelsystem beschrieben, das auf der Umsetzung von olefinisch ungesättigten Verbindungen mit geblockten Polyaminen beruht. Dieses System kann zwar bei Raumtemperatur gehärtet werden, jedoch werden Benzinbeständigkeit und Härte des Systems nur langsam erreicht. Eine Katalyse mit Lewis-Basen wird nicht erwähnt.

In der DE-A-39 32 517 wird die Vernetzung von Acryloyl-ungesättigten Bindemitteln mit Enamin-funktionalisierten Vernetzern beschrieben.

Diese Systeme sind als Spachtel- bzw. Füllermaterialien nur unzureichend geeignet, da hier keine Aushärtung bei Raumtemperatur innerhalb weniger Minuten möglich ist.

In der DE-41 37 613 wird die Vernetzung von CH-aciden und α,β-ungesättigten Bindemitteln mit Polyaminen beschrieben, wobei die Härtung mit Lewis-Basen zusätzlich katalysiert wird. Die erhaltenen Filme nehmen sich durch raschere Schleifbarkeit aus, problematisch ist jedoch die Haftung auf Untergründen wie z.B. Eisen oder Zink.

Aufgabe der Erfindung ist die Bereitstellung einer Bindemittelzusammensetzung, die zur Herstellung von Überzugsmitteln geeignet ist, die bei niedriger Temperatur, z.B. bei Raumtemperatur rasch zu Filmen mit guter Härte, Wasser- und Lösemittelbeständigkeit bei sehr hoher Haftung auf Metalluntergründen ausgehärtet werden können.

Es hat sich gezeigt, daß diese Aufgabe gelöst werden kann durch eine, einen Gegenstand der Erfindung darstellende Bindemittelzusammensetzung, enthaltend
A₁ 5 - 75 Gew.-% einer C-H-aciden Verbindung, erhältlich durch radikalische Polymerisation von einem oder mehreren hydroxy- und nicht-hydroxyfunktionellen, ethylenisch ungesättigten Monomeren in Gegenwart von Polyolen, z.B. Di-, Tri- und/oder höherfunktionellen Polyolen, die gegebenenfalls teilweise oder ganz in mit einer oder mehreren β-Ketocarbonsäuren verestert sein können und einem oder mehreren aliphatischen β-Ketocarbonsäureestern und anschließender Umesterung der Hydroxygruppen des Polymerisats und der Polyole mit den enthaltenen aliphatischen β-Ketocarbonsäureestern,
A₂ 0 - 60 Gew.-% einer C-H-aciden Verbindung, erhältlich durch Umesterung einem oder mehrerer Polyolen, z.B. Di-, Tri- und/oder höherfunktionellen Polyolen mit einem oder mehreren aliphatischen β-Ketocarbonsäureestern,
B 5 - 75 Gew.-% einer oder mehreren α,β-ungesättigten Verbindungen mit mindestens zwei Gruppen der allgemeinen Formel

   R₁R₂C = CR₃-CO-,

   die über den Rest eines zwei- oder mehrwertigen Alkohols, eines Di- oder Polyamins oder Aminoalkohols an mindestens eine weitere Gruppe R₁R₂C = CR₃-CO- gebunden ist, worin R₁, R₂ und R₃ unabhängig voneinander ein Wasserstoffatom und/oder ein gerader oder verzweigter Alkylrest mit 1 bis 10 Kohlenstoffatomen, der eine oder mehrere olefinische Unsättigungen und/oder eine oder mehrere Hydroxylgruppen aufweisen kann, sind,
C 2 - 40 Gew.-% einer oder mehrerer Polyglycidylverbindungen, z.B. Di-, Tri- oder höherfunktionelle Polyglycidylverbindungen,
D 5 - 70 Gew.-% eines oder mehrerer Polyamine mit mindestens zwei primären und/oder sekundären Aminfunktionen die verkappt sein können, im Molekül, als Härter und
E 0,01 - 10 Gew.-%, bezogen auf die Summe der Gewichte der Komponenten A₁, A₂, B, C, D und F, eines Katalysators in Form einer Lewis- oder Brönstedt-Base, wobei die konjugierten Säuren der letzteren einen pKA-Wert von mindestens 10 haben,
F 0,01 - 10 Gew.-% einer oder mehrerer Siloxanverbindungen der allgemeinen Formel

   Y-(CH₂)₃-Si-X₃,

   wobei

   Y=-NH₂,

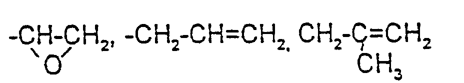

   und

   X=-OCH₃, -OCH₂CH₃,

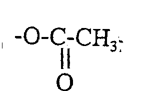

   wobei mehrere Gruppen X gleich oder verschieden sein können.

Überraschenderweise zeigte sich zudem, daß die erfindungsgemäße Bindemittelzusammensetzung sehr leicht verarbeitbar ist und problemlos mit lacküblichen Pigmenten und Füllstoffen dispergiert werden kann.

Das erfindungsgemäße Bindemittel kann organische Lösemittel und/oder Wasser enthalten, als organische Lösemittel beispielsweise Restlösemittel von der Herstellung oder durch nachträglichen Zusatz zur Einstellung günstiger Gebrauchsviskositäten. Solche Lösemittel können beispielsweise die später zur Herstellung der Überzugsmittel genannten sein.

Vorzugsweise wird aber auf die Anwesenheit eines organischen Lösemittels oder gegebenenfalls Wasser verzichtet und der Einsatz eines weitgehend lösemittelfreien Bindemittels angestrebt, um den insbesondere bei der Verwendung des Bindemittels als Spachtelmasse sehr störenden Filmschrumpf zu vermeiden.

Die erfindungsgemäße CH-acide Komponente A₁ kann hergestellt werden durch radikalische Polymerisation von hydroxy- und nicht- hydroxyfunktionellen, ethylenisch ungesättigten Monomeren in Gegenwart von Polyolen, die gegebenenfalls teilweise oder ganz mit einem oder mehreren aliphatischen β-Ketocarbonsäureestern verestert worden sind und einem oder mehreren aliphatischen β-Ketocarbonsäureestern und anschließender Veresterung der Hydroxygruppen des Polymerisats und der Polyole mit den enthaltenen aliphatischen β-Ketocarbonsäureestern. Die Polyole schließen Di-, Tri- und höherwertige Polyole und deren Gemische ein.

Hierbei kann beispielsweise so vorgegangen werden, daß in einem Reaktor ein oder mehrere Polyole, wie z.B. Di- oder Triole, wie beispielsweise Neopentylglykol oder Trimethylolpropan, gelöst in dem β-Ketocarbonsäureester, z.B. Acetessigester vorgelegt und erwärmt werden. Beispielsweise sind Temperaturen von 100 bis 180°C, z.B. 130°C geeignet. In diese Lösung können dann die hydroxy- und nicht- hydroxyfunktionellen Monomeren, wie z.B. Hydroxyethylacrylat, Butylacrylat und/oder Styrol, sowie ein Initiator oder Initiatorgemisch, wie z.B. tert.-Butylperbenzoat zudosiert werden.

Gegebenenfalls können auch Regler, wie z.B. Dodecanthiol oder α-Dimerstyrol zugegeben werden. Hierdurch ist es auch möglich, falls gewünscht, Di- und Triacrylmonomere, wie z.B. Dipropylenglykoldiacrylat einzusetzen. Derartige Monomere werden bevorzugt in Mengen bis zu 20 Gew.-%, beispielsweise 2 bis 20 Gew.-%, bezogen auf die gesamten ethylenisch ungesättigten Monomeren eingesetzt. Die Zudosierung kann über einen Zeitraum von mehreren Stunden, beispielsweise 3 bis 6 Stunden, z.B. 5 Stunden, erfolgen. Anschließend kann nachpolymerisiert werden, beispielsweise während eines Zeitraums von mehreren Stunden, beispielsweise 1 bis 3, z.B. 2 Stunden. Dabei wird zweckmäßigerweise gerührt; die Reaktionstemperatur liegt im vorstehend angegebenen Bereich, z.B. 130°C. Anschließend wird der entstehende Alkohol durch Erwärmen der Lösung abdestilliert, wobei die Temperatur kontinuierlich erhöht wird und zuletzt der überschüssige β-Ketocarbonsäureester unter Anlegen eines Vakuums abdestilliert werden kann.

Geeignete β-Ketcarbonsäureester sind beispielsweise Ester der Acetessigsäure bzw. alkylsubstituierter Acetessigsäuren, wie α-und/oder γ-Methylacetessigsäure. Geeignete Ester dieser Säuren sind solche mit aliphatischen Alkoholen, bevorzugt niederen Alkoholen mit 1 bis 4 Kohlenstoffatomen, wie Methanol, Ethanol oder Butanol.

Zur Herstellung der Komponente A₁ geeignete hydroxyfunktionelle ethylenisch ungesättigte Monomere sind solche mit primären und/oder sekundären OH-Funktionen. Geeignete Monomere mit primären Hydroxyfunktionen sind beispielsweise Hydroxyalkylester von α,β-ungesättigten Carbonsäuren, wie zum Beispiel Acrylsäure und/oder Methacrylsäure mit einem C₂-C₃-Hydroxyalkylrest mit einer primären OH-Gruppe, wie Hydroxyethyl(meth)acrylat und Hydroxypropyl(meth)-acrylat, sowie Hydroxyalkylester von α,β-ungesättigten Carbonsäuren, wie der Acrylsäure und/oder Methacrylsäure mit einem C₄-C₁₈-Hydroxyalkylrest mit einer primären OH-Gruppe, wie zum Beispiel Butandiolmono(meth)acrylat, Hydroxyhexyl(meth)acrylat, Hydroxyoctyl(meth)acrylat und Umsetzungsprodukte von Hydroxyethyl(meth)acrylat mit Caprolacton. Der hier verwendete Ausdruck "(Meth)acryl" ist synonym mit "Acryl und/oder Methacryl".

Beispiele für Monomere mit sekundären OH-Funktionen sind Hydroxylpropyl(meth)acrylat, Addukte aus Glycidyl(meth)acrylat und gesättigten kurzkettigen Fettsäuren mit C₁-C₃-Alkylresten, z.B. Essigsäure oder Propionsäure, sowie Addukte aus Glycidylestern stark verzweigter Monocarbonsäuren (Glycidylester der Versaticsäure ist unter dem Handelsnamen Cardura E erhältlich) mit ungesättigten COOH-funktionellen Verbindungen wie z.B. Acryl- bzw. Methacrylsäure, Maleinsäure, Crotonsäure, Addukte aus Cardura E mit ungesättigten Anhydriden wie z.B. Maleinsäureanhydrid, Umsetzungsprodukte aus Glycidyl(meth)acrylat mit gesättigten verzweigten oder unverzweigten Fettsäuren mit C₄-C₂₀-Alkylresten, z.B. Butansäure, Capronsäure, Laurinsäure, Palmitinsäure, Stearinsäure, Arachidonsäure. Die Umsetzung der Acrylsäure oder Methacrylsäure mit dem Glycidylester einer Carbonsäure mit einem tertiären α-Kohlenstoff kann vor, während oder nach der Polymerisation erfolgen.

Die Monomeren können eine oder mehrere Hydroxyfunktionen enthalten; beispielsweise können sie primäre und sekundäre Hydroxyfunktionen gemeinsam aufweisen.

Neben den hydroxylfunktionellen Monomeren können auch Monomere mit anderen funktionellen Gruppen eingesetzt werden, wie z.B. carboxylfunktionelle, epoxyfunktionelle oder aminofunktionelle polymerisierbare Monomere.

Beispiele für geeignete carboxylgruppenhaltige Monomere sind ungesättigte Carbonsäuren, wie z.B. Acryl-, Methacryl-, Itacon-, Croton-, Isocroton-, Aconit-, Malein- und Fumarsäure, Halbester der Malein- und Fumarsäure sowie β-Carboxyethylacrylat und Addukte von Hydroxyalkylestern der Acrylsäure und/oder Methacrylsäure mit Carbonsäureanhydriden, wie z.B. der Phthalsäure-mono-2-methacryloyloxyethylester, sowie Halbester von Maleinsäureanhydrid durch Anlagerung von gesättigten aliphatischen Alkoholen wie z.B. Ethanol, Propanol, Butanol und/oder Isobutanol.

Beispiele für epoxyfunktionelle Monomere sind Glycidyl(meth)acrylat, 1,2-Epoxybutylacrylat oder 2,3-Epoxycyclopentylacrylat. Weitere copolymerisierbare Glycidylmonomere sind z.B. (Meth(Meth)allylglycidylether oder 3,4-Epoxy-1-vinylcyclohexan.

Ebenfalls möglich ist die Verwendung von (Meth)acrylmonomeren mit endständigen tert.-Aminogruppen. Beispiele für solche Monomere sind tert.-Aminomethylmethacrylat oder tert.-Aminopropylmethacrylat. Im Falle der Verwendung derartiger Monomerer sollte auf die gleichzeitige Verwendung von glycidylfunktionalisierten Monomeren verzichtet werden, da sonst ein Gelieren des Polymeren nicht auszuschließen ist.

Neben den funktionalisierten Monomeren können auch nichtfunktionalisierte Monomere copolymerisiert werden.

Beispiele hierfür sind langkettige, verzweigte oder unverzweigte ungesättigte Monomere wie Alkyl(meth)acrylate mit C₈-C₁₈ Ketten im Alkylteil, z.B. Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat, Laurylacrylat-1214, Isobornyl(meth)acrylat, 4-tert.-Butylcyclohexylmethacrylat. Weitere Beispiele sind kurz- oder mittelkettige, verzweigte oder unverzweigte ungesättigte Monomere, wie Alkyl(meth)acrylate mit C₁-C₇-Ketten im Alkylteil, z.B. Methyl(meth)acrylat, Ethyl(meth)acrylat, Propyl(meth)acrylat, Butyl(meth)acrylat, Isopropyl(meth)acrylat, Isobutyl(meth)acrylat, tert.-Butyl(meth)acrylat, Pentyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat und Octadecenyl(meth)acrylat.

Statt der vorstehend genannten Alkylester der Acryl- und Methacrylsäure oder zusammen mit diesen Alkylestern können zur Herstellung von (Meth(Meth)acrylcopolymerisaten weitere ethylenisch ungesättigte Monomere eingesetzt werden, wobei sich die Auswahl dieser Monomeren weitgehend nach den gewünschten Eigenschaften der Überzugsmittel in bezug auf Härte, Elastizität, Verträglichkeit und Polarität richtet.

Eine weitere geeignete Komponente sind z.B. monovinylaromatische Verbindungen. Vorzugsweise enthalten sie 8 bis 10 Kohlenstoffatome je Molekül. Beispiele für geeignete Verbindungen sind Styrol, Vinyltoluole, α-Methylstyrol, Chlorstyrole, o-, m- oder p-Methylstyrol, 2,5-Dimethylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt.

Beispiele für weitere, geeignete ethylenisch ungesättigte Monomere sind die Alkylester der Malein-, Fumar-, Tetrahydrophthal-, Croton-, Isocroton-, Vinylessig- und Itaconsäure, wie z.B. die entsprechenden Methyl-, Ethyl, Propyl, Butyl, Isopropyl-, Isobutyl-, Pentyl-, Amyl-, Isoamyl-, Hexyl-, Cyclohexyl-, 2-Ethylhexyl-, Octyl-, 3,5,5-Trimethylhexyl-, Decyl-, Dodecyl-, Hexadecyl-, Octadecyl- und Octadecenylester.

Die Herstellung erfolgt beispielsweise als radikalische Polymerisation in Anwesentheit eines Radikalinitiators, wie sie dem Fachmann geläufig ist. Beispiele für Radikalinitiatoren sind Dialkylperoxide, wie Ditert.-Butylperoxid, Di-cumylperoxid; Diacylperoxide wie Dibenzoylperoxid, Dilauroylperoxid; Hydroperoxide, wie Cumolhydroperoxid, tert.-Butylhydroperoxid; Perester, wie tert.-Butylperbenzoat, tert.-Butylperpivalat, tert.-Butyl-per-3,5,5-trimethylhexanoat, tert.-Butyl-per-2-ethylhexanoat; Peroxiddicarbonate, wie Di-2-ethylhexylperoxydicarbonat, Dicyclohexylperoxydicarbonat; Perketale, wie 1,1-Bis-(tert.-butylperoxy)-3,5,5-trimethyl-cyclohexan, 1,1-Bis-(tert.-butylperoxy)-cyclohexan; Ketonperoxide, wie Cyclohexanonperoxid, Methylisobutylketonperoxid und Azo-Verbindungen, wie 2,2'-Azobis-(2,4-dimethyl-valeronitril), 2,2'-Azobis(2-methylbutyronitril), 1,11-Azo-bis-cyclohexancarbonitril, Azo-bisisobutyronitril, C-C-spaltende Initiatoren wie z.B. Benzpinakol-Derivate.

Die Polymerisationsinitiatoren werden im allgemeinen beispielsweise in einer Menge von 0,1 bis 4 Gew.-%, bezogen auf die Monomeren-Einwaage, zugesetzt.

Als Polyole, deren β-Ketocarbonsäureesterlösung als Polymerisationsgrundlage dient, sind gemäß einer bevorzugten Ausführungsform der Erfindung Monomere und Polymere geeignet, die ausgwählt sind aus:
a) Polyolen aus der Gruppe von geraden, verzweigten oder cyclischen Alkan-di- und-polyolen mit 2 bis 30 Kohlenstoffatomen, wobei die Alkanreste durch ein oder mehrere Heteroatome, wie z.B. Sauerstoffatome unterbrochen sein können und/oder einen oder mehrere aromatische Reste enthalten können. Reine Alkan-di- und -polyole haben bevorzugt 2 bis 12 Kohlenstoffatome.
b) hydroxylgruppenhaltigen Poly(meth)acrylaten oder Poly(meth)acrylamiden auf der Basis von (Meth)Acrylsäurehydroxyalkylestern oder (Meth)Acrylsäurehydroxyalkylamiden mit jeweils 2 bis 12 Kohlenstoffatomen im Alkylteil, gegebenenfalls copolymerisiert mit α,β-ungesättigten Monomeren, mit einem Zahlenmittel des Molekulargewichts (Mn) von 1000 bis 10000,
c) hydroxylgruppenhaltigen Poly(meth)acrylaten auf der Basis von (Meth(Meth)Acrylsäurehydroxyalkylestern mit 2 bis 12 Kohlenstoffatomen im Alkylteil und gegebenenfalls copolymerisierbaren α,β-ungesättigten Monomeren, die mit cyclischen Estern von Hydroxycarbonsäuren mit 4 bis 6 Kohlenstoffatomen modifiziert sind, mit einem Zahlenmittel des Molekulargewichts (Mn) von 1000 bis 10000, und
d) Polyester-Polyolen, Polyether-Polyolen und/oder Polyurethan-Polyolen, jeweils mit einem Zahlenmittel des Molekulargewichts (Mn) von 200 bis 2000, z.B. 500 bis 2000.

Beispiele für Alkan-di- und -polyole der Gruppe a) enthalten mindestens zwei Hydroxyfunktionen, vorzugsweise jedoch mindestens drei. Spezielle Beispiele hierfür sind Propandiol, Butandiol, Hexandiol, Glycerin, Trimethylolpropan, Pentaerythrit und Cyclohexan-1,4-diol, sowie die Umsetzungsprodukte von hydriertem und nicht-hydriertem Bisphenol A mit Ethylenoxid und/oder Propylenoxid.

Beispiele für hydroxylgruppenhaltige Poly(meth)acrylate b) auf der Basis von (Meth)Acrylsäurehydroxyalkylestern mit 2 bis 12 Kohlenstoffatomen im Alkylteil sind Hydroxylalkylester der Acrylsäure oder Methacrylsäure mit Alkoholen mit mindestens zwei Hydroxylgruppen, wie 1,4-Butandiol-mono(meth)acrylat, 1,6-Hexandiol-mono(meth)acrylat oder 1,2,3-Propantriolmono(meth)acrylat. Beispiele für hydroxylgruppenhaltige Poly(meth)acrylamide b) auf der Basis von (Meth)Acrylsäurehydroxyalkylamiden sind Amide der Acrylsäure oder Methacrylsäure mit Hydroxyalkylaminen oder Di(hydroxyalkyl)aminen mit jeweils 2 bis 12 Kohlenstoffatomen im Alkylteil, die eine oder mehrere Hydroxylgruppen aufweisen können, wie Acrylsäurehydroxyethylamid. Der in der vorliegenden Beschreibung und den Patentansprüchen verwendete Ausdruck (Meth)Acryl soll und/oder Methacryl bedeuten.

Die hydroxylgruppenhaltigen Poly(meth)acrylate der Komponente b) können Homo- oder Copolymerisate sein. Sie weisen bevorzugt ein Zahlenmittel des Molekulargewichts von 1000 bis 10000, besonders bevorzugt von 3000 bis 6000 auf. Copolymerisierbare Monomere zur Herstellung der Copolymerisate sind z.B. α,β-ungesättigte Monomere, radikalisch polymerisierbare Monomere aus der Gruppe der Ester von α,β-ungesättigten Carbonsäuren, wie Acrylsäure oder Methacrylsäure, wobei Beispiele für die Alkoholkomponenten der Ester Methyl-, Ethyl-, Propyl-Alkohol und deren Isomere und höhere Homologe sind. Weitere Beispiele sind Diester der Malein- oder Fumarsäure, wobei die Alkoholkomponente die gleiche wie vorstehend erwähnt ist. Weitere Beispiele sind vinylaromatische Verbindungen, wie Styrol, α-Methylstyrol und Vinyltoluol. Weitere Beispiele sind Vinylester kurzkettiger Carbonsäuren, wie Vinylacetat, Vinylpropionat und Vinylbutyrat.

Die hydroxylgruppenhaltigen Poly(meth)acrylate der vorstehend definierten Komponente c) können z.B. modifizierte Poly(meth)acrylathomo- und -copolymere sein, wie sie unter b) beschrieben werden, deren Hydroxylgruppen ganz oder partiell mit cyclischen Estern, wie z.B. von Hydroxycarbonsäuren mit 4 bis 6 Kohlenstoffatomen, wie Butyrolacton oder Caprolacton umgesetzt sind. Die erhaltenen modifizierten Poly(meth)acrylate der Komponente c) weisen bevorzugt ein Zahlenmittel des Molekulargewichts Mn von 1000 bis 10000 auf.

Beispiele für die Polyesterpolyole und Polyetherpolyole der Komponente d) sind solche mit einem Zahlenmittel des Molekulargewichts Mn von 200 bis 2000, z.B. 500 bis 2000. Spezielle Beispiele sind Umsetzungsprodukte von Di- bzw. Tricarbonsäuren, wie Adipinsäure oder Trimellithsäure, mit Polyolen, wobei die Polyole im Überschuß vorliegen. Weitere Beispiele sind Umsetzungsprodukte von Di- oder Triolen, wie Propandiol, Butandiol oder Glycerin, mit Ethylenoxid oder Propylenoxid. Zusätzlich können Monosäuren, wie Isononasäure oder Monoalkohole, wie Hexanol, eingesetzt werden.

Beispiele für Polyurethanpolyole der Komponente d) sind solche mit einem Zahlenmittel Mn von 200 bis 2000, z.B. 500 bis 2000. Spezielle Beispiele sind Umsetzungsprodukte aus Di- und Triolen wie Propandiol, Butandiol oder Glycerin mit Di-, Tri- und/oder Polyisocyanaten wie Isophorondiisocyanat oder Hexamethylendiisocyanat-isocyanurat. Die Alkoholkomponente muß hier im Überschuß vorliegen.

Die Polyole können ganz oder teilweise mit β-Ketocarbonsäuren verestert sein. Dies kann beispielsweise durch Umesterung mit aliphatischen β-Ketocarbonsäureestern erfolgen, beispielsweise wie vorstehend für die Herstellung der CH-aciden Komponente A1 beschrieben.

Zur Beschleunigung der Veresterungsreaktion im Anschluß an die Polymerisation in der Polyol β-Ketocarbonsäureesterlösung ist auch die Zugabe von Katalysatoren möglich. Beispiele für derartige Katalysatoren sind Säuren, wie Ameisensäure oder p-Toluolsulfonsäure. Es ist günstig bei der Umesterung die Reaktionstemperatur kontinuierlich zu erhöhen (beispielsweis in Schritten von 10°C/20 min.), bis eine Temperatur erreicht ist, die knapp (etwa 10°C) unterhalb des Siedepunktes des β-Ketocarbonsäureesters liegt. Nach quantitativer Umesterung wird der überschüsseige β-Ketocarbonsäureester entfernt, beispielsweise durch Anlegen eines Vakuums. Anschließend kann das Gemisch abgekühlt und mit einem inerten Lösemittel auf einen gewünschten Festkörpergehalt eingestellt werden.

Die Mengenanteile der einzelnen Bestandteile, die zur Herstellung der Komponente A1 umgesetzt werden, können beispielsweise wie folgt gewählt werden: So können beispielsweise 5 bis 65 Gew.-% der hydroxyfunktionellen ethylenisch ungesättigten Monomeren zusammen mit 95 bis 35 Gew.-% der ethylenisch ungesättigten nicht- hydroxyfunktionellen Monomere eingesetzt werden, wobei sich diese Gewichtsprozente auf 100 Gew.-% addieren. Bevorzugt wird so gearbeitet, daß die OH-Zahl aus dem durch Polymerisation erhaltenen Polymer zusammen mit den vorliegenden Polyolen vor der Umesterung mit den β-Ketocarbonsäureestern 50 bis 450 mg KOH/g beträgt. Bei der Umesterung mit den β-Ketocarbonsäureestern können die OH-Gruppen von Polymer und Polyolen bis zu 100 % verestert werden, bevorzugt werden 50 bis 100 % der vorhandenen OH-Gruppen verestert.

Die erfindungsgemäßen Bindemittelzusammensetzungen können zur Viskositätseinstellung auch einen oder mehrere Reaktivverdünner enthalten, z.B. 2-Acetoacetoxy-ethylmethacrylat oder den Glycidylester der Versaticsäure (Cardura^{R} E der Fa. Shell).

Als weitere Bindemittelkomponente A₂ werden CH-acide Verbindungen eingesetzt, die durch Umesterung von Polyolen, z.B. Di-, Tri- und/oder höherwertigen Polyolen mit einem oder mehreren aliphatischen β-Ketocarbonsäureestern erhalten werden. Die Umesterungsreaktion kann z.B. wie vorstehend für die Komponente A₁ beschrieben, erfolgen. Als β-Ketocarbonsäureester kommen die unter der Beschreibung der Komponente A₁ erwähnten Verbindungen zum Einsatz. Di-, Tri- oder höherwertige Polyole, die zur Herstellung der Komponente A₂ gewählt werden können, sind beispielsweise die Verbindungen a) und d) aus der Beschreibung der Komponente A₁.

Als weitere Bindemittelkomponente B) wird in den erfindungsgemäßen Bindemittelzusammenseztungen eine Verbindung eingesetzt, die mindestens zwei ungesättigte funktionelle Gruppen der allgemeinen Formel (I)

R₁R₂C=CR₃-CO-

aufweist, worin R₁, R₂ und R₃ wie vorstehend definiert sind.

Die Gruppe der allgemeinen Formel (I) in der Komponente B) kann von einer ein- oder mehrfach ungesättigten Monocarbonsäure, z.B. mit 2 bis 10, vorzugsweise 3 bis 6 Kohlenstoffatomen, wie Zimtsäure, Crotonsäure, Citraconsäure, Mesaconsäure, Dihydrolävulinsäure, Sorbinsäure, vorzugsweise Acrylsäure und/oder Methacrylsäure abgeleitet sein.

Diese Gruppen können über kurz- oder langkettige Reste, Oligomere und/oder Polymere von zwei- oder mehrwertigen Alkoholen, Di- oder Polyaminen oder Aminoalkoholen miteinander verbunden sein, wobei diese Oligomere und Polymeren z.B. Zahlenmittel des Molekulargewichts Mn von 1000 bis 10000 aufweisen können. Als Oligomere und Polymere kommen beispielsweise gesättigte und/oder ungesättigte zwei oder mehrere Hydroxylgruppen enthaltende Polyether, Polyester oder Polyurethane in Frage, z.B. solche auf der Basis von Maleinsäure, Phthalsäure und Diolen, Hydroxylgruppen enthaltenden Acrylharzen, aliphatischen oder vorzugsweise aromatischen, gegebenenfalls Hydroxylgruppen enthaltenden Epoxidharzen, z.B. solchen auf der Basis von Diphenylolpropan und/oder -methan, Hydantoin und/oder Aminharzen. Dabei kann der Rest der allgemeinen Formel (I) esterartig gebunden sein, z.B. durch Anlagerung von Acryl- oder Methacrylsäure oder deren Derivaten an Epoxygruppen von Epoxidharz oder durch Veresterung an Hydroxylgruppen von Polyolen. Geeignete mehrwertige Alkohole sind beispielsweise Alkandiole und Alkantriole mit 2 bis 8 Kohlenstoffatomen, wie Ethandiol, die verschiedenen Propan-, Butan-, Hexan- und Octandiole, oder deren Homologe, die entsprechenden oligomeren Ether, ferner Glycerin, Trimethylolethan oder Trimethylolpropan, Hexantriol, Pentaerythrit, Dipentaerythrit, Sorbit, sowie Polyvinylalkohol.

Die Gruppen der allgemeinen Formel (I) können auch über NH-Gruppen und/oder OH-Gruppen an Polyamine mit mindestens zwei NH-Gruppen oder mindestens einer NH-Gruppe und mindestens einer OH-Gruppe gebunden sein. Als NH-Gruppen enthaltende Ausgangsverbindungen für derartige Verbindungen können beispielsweise Di- und Polyamine genannt werden, wie Alkylendiamine und deren Oligomere, wie Ethylendiamin, Propylendiamin, Diethylentriamin, Tetramine und höhere Homologe dieser Amine, sowie Aminoalkohole wie Diethanolamin oder dergleichen. Als Amine kommen z.B. auch Aminocarbonsäureester mehrwertiger Alkohole in Frage. Als Verbindung mit NH-Gruppen kommen z.B. in Frage Acryl- oder Methacrylsäurepolyamide, ferner Polyurethane, z.B. Polyisocyanate, die in Form von Polyurethangruppen verkappt sind, wie solche, die durch Umsetzung von Hydroxyethylacrylat mit Polyisocyanaten erhalten werden, Aminharze wie Methoxymelamine, vorzugsweise Hexamethylolmelamin, Harnstoffharze, wobei der Rest der allgemeinen Formel (I) mit der Gruppierung -CO- an die Amingruppen dieser Verbindungen als Amid gebunden ist. Falls diese Aminverbindungen über OH-Gruppen bzw. Hydroxylalkylgruppen verfügen, ist es auch möglich, daß der Rest der Formel (I) esterartig oder aber über eine Ethergruppe an diese Verbindungen gebunden ist. Für die Etherbindung des Restes der Formel (I) kann man von einem Hydroxyalkylester oder einem Hydroxyalkylamid einer ungesättigten Säure wie Acrylsäure ausgehen.

Ebenfalls möglich ist die Verknüpfung der Gruppen der Formel (I) über Polyisocyanate, wie z.B. Addukte aus Copolymeren der Verbindung α-Dimethyl-m-isopropenylbenzylisocyanat (im weiteren Text stets m-TMI genannt) mit Hydroxy(meth)acrylmonomeren. Die Comonomeren, die zur Herstellung der Copolymeren mit m-TMI verwendet werden können, sind z.B. übliche Ester der (Meth)acrylsäure, wie sie vorstehend zur Erläuterung der Polyole bereits genannt wurden. Beispiele für Hydroxy(meth)acrylmonomere zur Adduktbildung sind Hydroxyethyl(meth)acrylat, Hydroxypropyl(meth)acrylat oder Butandiolmonoacrylat. Ebenfalls möglich ist die Verwendung von Additionsprodukten von Hydroxyethylmethacrylat an Caprolacton.

Die Komponente B) kann frei von Lösemitteln sein oder aber Restlösemittel von ihrer Herstellung enthalten, z.B. aliphatische und/oder aromatische Kohlenwasserstoffe. Der Festkörpergehalt kann auf gewünschte Werte eingestellt werden, z.B. durch Entfernen des Restlösemittels, beispielsweise durch Destillation oder durch Zusatz von Wasser oder Lösemitteln, die für die anschließende Bereitung von Überzugsmitteln benötigt werden und später beschrieben werden. Bevorzugt wird das gleiche Lösemittel wie für die Komponente A) verwendet. In diesem Falle bezieht sich die Angabe 5 bis 75 Gew.-% der Komponente B) in der erfindungsgemäßen Bindemittelzusammensetzung auf das Festkörpergewicht der Komponente B).

Als weitere Komponente C) werden Di-, Tri- oder höherwertige Polyglycidylverbindungen eingesetzt. Es handelt sich hierbei um epoxidfunktionelle Verbindungen mit mindestens zwei Epoxidfunktionen im Molekül, insbesondere mit einem Zahlenmittel des Molgewichtes (Mn) von 200 bis 10000 g/mol.

Beispiele hierfür sind übliche Di- oder Polyepoxide, z.B. Polyglycidylether auf Basis von Diethylenglykol, Dipropylenglykol, Polypropylenglykol mit einem Zahlenmittel des Molgewichtes (Mn) bis 2000, Triglycidylether von Glycerin und/oder Di- oder Polyphenolen wie Bisphenol A.

Weitere Beispiele für Di- oder Polyepoxide sind solche auf der Basis von Di- oder Polyglycidylestern. Beispiele hierfür sind Umsetzungsprodukte aus 1-Hydroxy-2,3-epoxypropan mit Phthal- oder Terephthalsäure zu Phthal- oder Terephthalsäure-bis(2,3-epoxypropylester) oder einem Diglycidylether von Bisphenol A mit Trimellithsäureanhydrid zu Polyestern mit einem Zahlenmittel des Molekulargewichtes (Mn) von 500 bis 2000.

Ebenfalls verwendbare Beispiele sind Glycidyl-funktionalisierte (Meth)acrylcopolymere. Beispiele hierfür sind Copolymere von Glycidyl(meth)acrylat oder 2,3-Epoxycyclopentylacrylat. Als Comonomere können z.B. Ester der (Meth)acrylsäure, wie z.B. Methyl-, Ethyl-, Butyl-, Isobutyl-, Ethylhexyl-, Cyclohexyl- und/oder Lauryl(meth)acrylat gewählt werden, hydroxyfunktionalisierte Ester der (Meth)acrylsäure wie z.B. Hydroxyethyl- und/oder Hydroxypropylester, weiterhin auch Styrol, Vinyltoluol und/oder α-Methylstyrol sowie alle α,β-ungesättigten Monomere, wie sie bereits vorstehend für die Komponente A₁) beschrieben wurden. Das Zahlenmittel des Molgewichtes (Mn)kann beispielsweise zwischen 1000 und 10000 liegen, bevorzugt bei 2000 bis 5000. Weitere copolymerisierbare Glycidylmonomere sind z.B. (Meth(Meth)allylglycidylether oder 3,4-Epoxy-1-vinylcyclohexan. Die Herstellung der Copolymere erfolgt über radikalische Lösungspolymerisation.

Die Komponente D) in der Bindemittelzusammensetzung ist eine Polyaminkomponente, z.B. mit mindestens zwei funktionellen Gruppen der Formel

R⁴HN -,

worin R⁴ ein Wasserstoffatom oder ein gerader oder verzweigter Alkylrest mit 1 bis 10 Kohlenstoffatomen oder Cycloalkylrest mit 3 bis 8, bevorzugt 5 oder 6 Kohlenstoffatomen, sein kann, enthält.

Geeignete Polyamine sind Diamine und Amine mit mehr als zwei Aminogruppen, wobei die Aminogruppen primär und/oder sekundär sein können. Darüber hinaus sind als Polyamine beispielsweise auch Addukte geeignet, die aus Polyaminen mit mindestens zwei primären Aminogruppen und mindestens einer, bevorzugt einer, sekundären Aminogruppen bestehen, mit Epoxyverbindungen, Polyisocyanaten und Acryloylverbindungen. Darüber hinaus sind auch Aminoamide und Addukte aus carboxyfunktionalisierten Acrylaten mit Iminen geeignet, die mindestens zwei Aminogruppen aufweisen.

Beispiele für geeignete Di- und Polyamine sind beispielsweise in den EP-A-0 240 083 und EP-A-0 346 982 beschrieben. Beispiele hierfür sind aliphatische und/oder cycloaliphatische Amine mit 2 bis 24 C-Atomen, die 2 bis 10 primäre Aminogruppen, bevorzugt 2 bis 4 primäre Aminogruppen, und 0 bis 4 sekundäre Aminogruppen enthalten. Repräsentative Beispiele hierfür sind Ethylendiamin, Propylendiamin, Butylendiamin, Pentamethylendiamin, Hexamethylendiamin, 4,7-Dioxydecan-1,10-diamin, 1,2-Diaminocyclohexan, 1,4-Diaminocyclohexan, Isophorondiamin, Diethylentriamin, Dipropylentriamin, 2,2-Bis-(4-aminocyclohexyl)propan; Polyether-Polyamine, z.B. solche mit dem Handelsnamen Jeffamine^{R} der Jefferson Chemical Company, Bis-(3-aminopropyl)ethylamine, 3-Amino-1-(methylamino)-propan und 3-Amino-1(cyclohexylamino)propan.

Beispiele für gebräuchliche Polyamine auf der Basis von Addukten von polyfunktionellen Aminkomponenten mit di- oder polyfunktionellen Epoxyverbindungen sind solche, die hergestellt werden unter Verwendung von beispielsweise di- oder polyfunktionellen Epoxyverbindungen, wie Diglycidyl- oder Polyglycidylether von (cyclo)aliphatischen oder aromatischen Hydroxyverbindungen wie Ethylenglykol, Glycerin, 1,2- und 1,4-Cyclohexandiol, Bisphenole wie Bisphenol A, Polyglycidylether von Phenolformaldehyd-Novolaken, Polymere ethylenisch ungesättigter Gruppen, die Epoxy-Gruppen enthalten, wie Glycidyl(meth)acrylat, N-Glycidyl(meth)acrylamid, und/oder Allylglycidylether, wahlweise copolymerisiert mit verschiedenen anderen ethylenisch ungesättigten Monomeren, Glycidylether von Fettsäure mit 6 - 24 C-Atomen, epoxidierte Polyalkadiene, wie epoxidiertes Polybutadien, Hydantoin-Epoxy-Harze, Glycidylgruppen-haltige Harze, wie Polyester oder Polyurethane, die eine oder mehrere Glycidylgruppen pro Molekül enthalten, und Gemische der genannten Harze und Verbindungen.

Die Anlagerung der Polyamine an die genannten Epoxyverbindungen erfolgt unter Ringöffnung der Oxirangruppierung. Die Reaktion kann beispielsweise in einem Temperaturbereich von 20 - 100°C erfolgen, bevorzugt aber zwischen 20 - 60°C. Gegebenenfalls kann mit 0,1 - 2 Gew.-% einer Lewis-Base wie Triethylamin oder einem Ammoniumsalz wie Tetrabutylammoniumjodid katalysiert werden.

Gebräuchliche Isocyanate für die Herstellung der Polyaminkomponente auf der Basis von Polyamin-Isocyanat-Addukten sind aliphatische, cycloaliphatische und/oder aromatische Di-, Tri- oder Tetraisocyanate, die ethylenisch ungesättigt sein können. Beispiele hierfür sind 1,2-Propylendiisocyanat, Trimethylendiisocyanat, Tetramethylendiisocyanat, 2,3-Butylendiisocyanat, Hexamethylendiisocyanat, 2,2,4-Trimethylhexamethylen-diisocyanat, 2,4,4-Trimethylhexamethylendiisocyanat, ω,ω'-Dipropyletherdiisocyanat, 1,3-Cyclopentandiisocyanat, 1,2- und 1,4-Cyclohexandiisoyanat, Isophorondisocyanat, 4-Methyl-1,3-diisocyanatcyclohexan, Transvinylidendiisocyanat, Dicyclohexylmethan-4,4'-diisocyanat, 3,3'-Dimethyl-dicyclohexylmethan-4,4'-diisocyanat, Toluydendiisocyanat, 1,3-Bis(1-isocyanato-1-methylethyl)benzol, 1,4-Bis(1-isocyanato-1-methylethyl)-benzol, 4,4'-Diisocyanatodiphenyl, 3,3'-dichloro-4,4'-diisocyanatodiphenyl, Addukte aus 2 Molen eines Diisocyanates, z.B. Hexamethylendiisocyanat oder Isophorondiisocyanat an ein Mol eines Diols, z.B. Ethylenglykol, das Addukt aus 3 Molen Hexamethylendiisocyanat an 1 Mol Wasser (erhältlich unter dem Handelsnamen Desmodur N von der Bayer AG), das Addukt aus 1 Mol Trimethylolpropan und 3 Molen Toluidendiisocyanat (erhältlich unter dem Handelsnamen Desmodur L von der Bayer AG) und das Addukt aus 1 Mol Trimethylolpropan und 3 Molen Isophorondiisocyanat.

Die Anlagerung von Polyaminen an die genannten Isocyanatvebindungen erfolgt beispielsweise in einem Temperaturbereich von 20 - 80°C, bevorzugt 20 - 60°C. Gegebenenfalls kann durch Zugabe von 0,1 bis 1 Gew.-% eines tertiären Amins, wie Triethylamin und/oder 0,1 - 1 Gew.-% einer Lewis-Säure, wie Dibutylzinnlaurat, katalysiert werden.

Beispiele für di- oder polyfunktionelle acryloyl-ungesättigte Verbindungen zum Herstellen von Polyaminaddukten sind in der US-PS 4 303 563 beschrieben, z.B. Ethylenglykoldiacrylat, Diethylenglykoldiacrylat, Trimethylenglykoldiacrylat, 1,3-Butylenglykoldiacrylat, 1,6-Hexamethylenglykoldiacrylat, Trimethylolpropandiacrylat, Pentaerythrituoltetraacrylat und Pentaerythrituoltriacrylat. Weitere Beispiele für polyfunktionelle acryloyl-ungesättigte Acrylate sind:
1) Urethanacrylate, erhalten durch die Reaktion einer Isocyanatgruppe eines Polyisocyanates mit einem Hydroxyacrylat, z.B. Hexamethylendiisocyanat und Hydroxyethylacrylat, die Herstellung ist beschrieben in US-PS 3 297 745,
2) Polyetheracrylate, erhalten durch Umesterung eines hydroxyterminierten Polyethers mit Acrylsäure, beschrieben in US-PS 3 380 831,
3) Polyesteracrylat, erhalten durch Veresterung eines Hydroxylgruppenhaltigen Polyesters mit Acrylsäure, beschrieben in US-PS 3 935 173,
4) polyfunktionelle Acrylate, erhalten durch die Reaktion eines Hydroxyl-funktionalisierten Acrylates, wie z.B. Hydroxyethylacrylat mit
   a) Dicarbonsäuren mit 4 - 15 C-Atomen,
   b) Polyepoxiden mit terminalen Glycidylgruppen,
   c) Polyisocyanaten mit terminalen Isocyanatgruppen, beschrieben in US-PS 3 560 237,
5) Acrylat-terminierte Polyester, erhalten durch die Reaktion von Acrylsäure, einem Polyol mit mindestens drei Hydroxyfunktionen und einer Dicarbonsäure, beschrieben in US-PS 3 567 494,
6) Polyacrylat, erhalten durch die Reaktion von Acrylsäure mit einem Epoxidfunktionen enthaltenden epoxidiertem Öl, wie Sojabohnenöl oder Leinsamenöl, bescheiben in US-PS 3 125 592,
7) Polyacrylat, erhalten durch die Reaktion von Acrylsäure mit Epoxidgruppen eines Diglycidylethers von Bisphenol A, beschrieben in US-PS 3 373 075,
8) Polyacrylat, erhalten durch die Reaktion von Acrylsäure an ein Epoxid-funktionalisiertes Vinylpolymer, z.B. Polymere mit Glycidylacrylat oder Vinylglycidylether, beschrieben in US-PS 3 530 100,
9) Polyacrylat, erhalten durch die Reaktion von Acrylsäureanhydrid mit Polyepoxiden, beschrieben in US-PS 3 676 398,
10) Acrylat-Urethanester, erhalten durch die Reaktion eines Hydroxyalkylacrylates, mit einem Diisocyanat und einem Hydroxyl-funktionalisierten Alkydharz, beschrieben in US-PS 3 676 140,
11) Acrylat-Urethanpolyester, erhalten durch die Reaktion eines Polycaprolactondiols- oder -triols mit einem organischen Polyisocyanat und mit einem Hydroxyalkylacrylat, beschrieben in US-PS 3 700 634,
12) Urethan-Polyacrylat, erhalten durch die Reaktion eines Hydroxyfunktionalisierten Polyesters mit Acrylsäure und einem Polyisocyanat, beschrieben in US-PS 3 759 809.

Die Acryloyl-Endgruppen der Di- bzw. Polyacrylmonomeren bzw. der Polyacrylate aus den Beispielen 1) bis 12) können mit Polyaminen funktionalisiert werden. Die Anlagerung kann z.B. in einem Temperaturbereich von 20 - 100°C, bevorzugt bei 40 - 60°C, erfolgen.

Eine weitere Methode zur Synthese eines Amin-funktionalisierten Härters ist in der EP-A-2801 beschrieben. Hier werden Acrylsäureestercopolymere mit Diaminen unter Alkoholabspaltung amidisiert. Die dabei erhaltene reaktive Gruppe besitzt folgende Struktur: 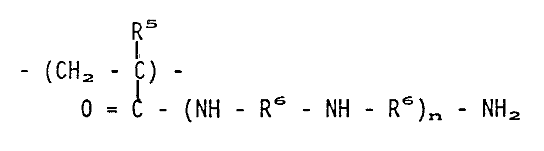
- R⁵ =: H oder CH₃
- R⁶ =: Alkylengruppen mit 2 oder 3 C-Atomen, die gleich oder verschieden sein können
- n =: 0, 1, 2 oder 3
wobei der Rest 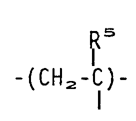 aus dem Acrylsäureestercopolymergerüst stammt.

Das Acrylsäureestercopolymere besitzt ein Zahlenmittel des Molgewichts Mn von 1000 - 20000, bevorzugt 2000 - 5000. Beispiele für mögliche Comonomere sind Ester der (Meth)acrylsäure, wie z.B. Methyl-, Ethyl-, Butyl-, Cyclohexyl(meth)acrylat, Hydroxyethyl(meth)acrylat, Hydroxypropyl(meth)acrylat, weiterhin (Meth)acrylsäure, Styrol und Vinyltoluol.

Besonders bevorzugt ist Methylacrylat, da dieses Monomer der Aminolyse besonders leicht zugänglich ist. Der Anteil an Methylacrylat am Copolymeren beträgt z.B. 2 - 35 Gew.-%. Die Herstellung der Copolymere erfolgt durch Lösungspolymerisation in üblichen Lösungsmitteln wie Toluol, Xylole, Acetate, z.B. Butylacetat oder Ethylglykolacetat, Ethern wie Tetrahydrofuran oder Aromatengemische wie das Handelsprodukt Solvesso 100. Die Synthese der Copolymere ist dem Fachmann bekannt und bedarf keiner weiteren Erläuterung. Die Polyamine, die bei der Aminolyse eingesetzt werden, müssen mindestens zwei primäre oder sekundäre Amingruppen enthalten und entsprechend den bereits zuvor beschriebenen.

Ebenfalls als Härter verwendbar sind Reaktionsprodukte aus der Umsetzung eines (Meth)acrylsäurecopolymeren mit Alkyleniminen, wie sie in der EP-A-0 179 954 beschrieben wurden. Die erhaltenen funktionellen Gruppen besitzen die Struktur: 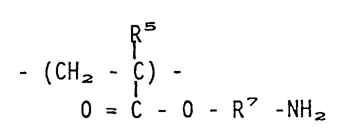
- R⁵ =: H oder CH₃
- R⁷ =: Alkylengruppe mit 2 bis 4 C-Atomen,
wobei der Rest 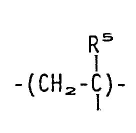 wie vorstehend definiert ist.

Neben (Meth)acrylsäure kann das Copolymere Ester der (Meth)acrylsäure oder Vinylverbindungen wie Styrol enthalten. Die beispielsweise verwendbaren Comonomeren wurden bereits bei der Definition der hydroxylgruppenhaltigen Poly(meth)acrylate b) beschrieben. Beispiele für Alkylenimine sind z.B. Propylen- oder Butylenimin.

Beispiele für ebenfalls erfindungsgemäß als Härter verwendbare Polyamine sind auch solche, die hergestellt werden durch Umsetzung von Copolymeren von α-Dimethyl-m-isopropenylbenzylisocyanat (TMI), die z.B. ein Zahlenmittel des Molgewichts (Mn) von 1000 bis 10000 aufweisen, mit Mono- oder Diketiminen, die entweder eine OH- oder sec. NH-Gruppierung enthalten.

Als Comonomere zur Herstellung der TMI-Copolymeren können alle üblichen vinylisch polymerisierbaren Monomeren ohne OH-Funktionalität verwendet werden, wie beispielsweise Ester der (Meth)acrylsäure, wie z.B. Methyl-, Ethyl-, Butyl-, Isobutyl-, Ethylhexyl-, Cyclohexyl- und/oder Lauryl(meth)acrylat, weiterhin Styrol, Vinyltoluol und/oder - Methylstyrol. Die Herstellung der Copolymere kann z.B. über übliche radikalische Lösungspolymerisation erfolgen, wie sie dem Fachmann bekannt ist. Gearbeitet wird beispielsweise in aprotischen organischen Lösemitteln, z.B. Toluol und Xylol, und Estern, z.B. Butylacetat.

Verwendet hierzu werden im allgemeinen übliche Radikalinitiatoren, wie Peroxide und Azoverbindungen. Die Reaktion erfolgt z.B. unter Erwärmen, beispielsweise auf Temperaturen von 80 bis 140°C.

Das monomere TMI kann in einem Bereich von 2 bis 40 Gew.-%, bezogen auf das Gewicht sämtlicher Monomeren copolymerisiert werden, bevorzugt aber in einem Bereich von 5 bis 25 Gew.-%.

Das Isocyanat-terminierte Copolymer wird anschließend mit einem oder mehreren mit OH- oder sec.NH-funktionalisierten Mono- und/oder Diketiniminen und/oder Mono- und/oder Dialdiminen umgesetzt.

Die Herstellung der Ketimine und/oder Aldimine (im Folgenden wird zur Vereinfachung der Ausdruck "Ketimine" gewählt, der jedoch auch Aldimine einschließen soll) erfolgt z.B. durch Umsetzung von Alkanolaminen oder Di- bzw. Triaminen, die mindestens eine primäre Aminogruppe, im Falle der Di- bzw. Triamine zusätzlich eine sekundäre Aminfunktion tragen, mit Aldehyden und/oder Ketonen unter Wasserabspaltung.

Beispiele für Alkanolamine sind:
Monoethanolamin, Monopropanolamin, Monohexanolamin oder 2-Amino-2-hydroxypropan.

Beispiele für Di- bzw. Triamine, die mindestens eine primäre Aminogruppe und eine sekundäre Aminogruppe tragen sind:
N-Methylpropylamin, Diethylentriamin, Dipropylentriamin oder Bishexamethyltriamin.

Zur Herstellung der TMI-Acrylat/Ketimin-Addukte werden die primären Aminogruppen der oben genannten Amine blockiert.

Hierbei werden die primären Amine mit Aldehyden oder Ketonen unter Wasserabspaltung zu Schiffchen Basen bzw. Aldiminen oder Ketiminen umgesetzt. Beispiele für solche Aldehyde und Ketone sind:

C₃-C₁₀-Verbindungen, wie Hexylaldehyd, Octylaldehyd, Diisopropylketon und/oder Methylisobutylketon. Die beiden letzten Verbindungen sind besonders bevorzugt, weil sie nur eine geringe Tendenz zu Nebenreaktionen zeigen.

Die OH- oder sec.NH-funktionalisierten Mono- oder Diketimine werden bei der Anlagerung an das Isocyanat-terminierte Copolymere bevorzugt im Unterschuß eingesetzt, bevorzugt werden 90 - 95 % der Isocyanatgruppen mit OH- oder NH-Gruppen umgesetzt. Die verbleibenden überschüssigen Isocyanatgruppen werden in einem letzten Reaktionsschritt mit Monoalkohol wie z.B. Ethanol, Propanol oder Butanol urethanisiert.

Zur Synthese der Ketimin- bzw. Aldimin-funktionalisierten (verkappten) Polyamine wird beispielsweise zuerst ein TMI-Copolymerisat durch eine radikalische Lösungspolymerisation hergestellt. Anschließend wird ein Alkanolamin oder Di- bzw. Triketimin, das sowohl mindestens eine primäre als auch eine sekundäre Aminfunktion trägt, mit dem gewünschten Blockierungsmittel Aldehyd oder Keton in einem organischen Lösemittel, das mit Wasser ein azeotropes Gemisch bildet, vorgelegt. Durch Erhitzen dieses Gemisches wird das entstehende Reaktionswasser azeotrop abdestilliert.

Es ist günstig, die Herstellung unter Inertgas durchzuführen. Das Blockierungsmittel kann im Überschuß eingesetzt werden, das im Anschluß an die Reaktion abdestilliert werden kann. Es ist zweckmäßig, als Verkappungsmittel ein Keton/Aldehyd zu wählen, das selbst mit Wasser ein Azeotrop bildet, so daß auf ein zusätzliches organisches Lösemittel verzichtet werden kann. Zur Addition des OH- bzw. sec.NH-funktionalisierten Ketimins bzw. Aldimins an das Isocyanat-terminierte Copolymerisat wird das Ketimin bei z.B. 80°C unter Inertgas vorgelegt und das Copolymerisat in z.B. zwei Stunden zudosiert. Mit Hilfe einer Lewis-Säure, wie z.B. Dibutylzinnlaurat kann die Reaktion gegebenenfalls katalysiert werden. Nach Beendigung der Zudosierung wird, sofern das Ketimin im Unterschuß vorliegt, ein Alkohol, z.B. Butanol zugefügt. Es wird gegebenenfalls noch bei erhöhter Temperatur z.B. etwa 10 bis 30 min. gerührt.

Die vorstehende Herstellungsweise stellt lediglich ein Beispiel für eine Verfahrensweise dar. Es kann beispielsweise auch so gearbeitet werden, daß das Copolymerisat vorgelegt wird und das Ketimin zugesetzt wird.

Die terminierten (freien) Aminogruppen der Polyamin-Härterkomponente D) können verkappt sein, z.B. mit Ketonen oder Aldehyden unter Ausbildung Schiffscher Basen.

Alle bisher beschriebenen Polyamine besitzen gegenüber den erfindungsgemäßen Bindemittelkomponenten eine sehr hohe Reaktivität, was sich in einer sehr geringen Topfzeit äußert. Aus diesem Grunde kann es zweckmäßig sein, die terminierten Amingruppen der genannten Polyamine mit Aldehyden oder Ketonen unter Wasserabspaltung zu Schiffschen Basen bzw. Aldiminen oder Ketiminen umzusetzen. Beispiele für zur Verkappung verwendbare Aldehyde und Ketone sind C₃-C₁₀-Vebindungen, wie Hexylaldehyd, Octylaldehyd, Diisocpropylketon und/oder Methylisobutylketon. Die beiden letzten Verbindungen sind besonders bevorzugt, weil sie nur eine geringe Tendenz zu Nebenreaktionen zeigen.

Die Komponente D) kann die Katalysatoren der Komponente E) eingemischt enthalten. Die Katalysatoren liegen in Form von Lewis-Basen oder Brönstedt-Basen vor, wobei die konjugierten Säuren der letzteren einen pKA-Wert von mindestens 10 haben. Die Komponente E) kann aus einem oder mehreren Katalysatoren bestehen. Als besonders geeignet erwiesen sich Lewis-Basen, wie z.B. solche der Gruppe von cycloaliphatischen Aminen, wie Diazabicyclooctan (DABCO), tert.-aliphatischen Aminen, wie Triethylamin, Tripropylamin, N-Methyldiethanolamin, N-Methyldiisopropylamin oder N-Butyldiethanolamin, sowie Amidinen wie Diazabicycloundecen (DBU), und Guanidinen, wie z.B. N,N,N',N'-Tetramethylguanidin. Weitere Beispiele sind alkyl- oder arylsubstituierte Phosphane, wie z.B. Tributylphosphan, Triphenylphosphan, Tris-p-tolylphosphan, Methyl-diphenylphosphan, sowie hydroxy- und aminfunktionalisierte Phosphane, wie z.B. Trishydroxymethylphosphan und Tris-dimethylaminoethylphosphan.

Beispiele für die einsetzbaren Brönstedt-Basen sind Alkoholate, wie Natrium- oder Kaliumethylat, quartäre Ammoniumverbindungen, wie Alkyl-, Aryl- oder Benzylammoniumhydroxide oder -halogenide, wie z.B. Tetraethyl- oder Tetrabutylammoniumhydroxid oder -fluorid, sowie Trialkyl- oder Triaryl-phosphoniumsalze oder -hydroxide.

Die Menge der Katalysatoren beträgt im allgemeinen 0,01 bis 5 Gew.-%, vorzugsweise 0,02 bis 2 Gew.-%, bezogen auf den Gesamtfeststoffgehalt der Komponenten A₁, A₂, B, C, D und F.

Als weitere Komponente F) werden Siloxanverbindungen der allgemeinen Formel

Y-(CH₂)₃-Si-X₃,

wobei

Y=-NH₂,

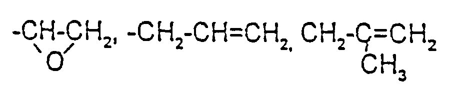

und

X=-OCH₃, -OCH₂CH₃,

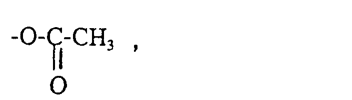

wobei mehrere Gruppen X gleich oder verschieden sein können.
Beispiele für derartige Siloxanverbindungen sind aminfunktionalisierte Siloxane, wie 3-Aminopropyl-trimethoxysilan, N-Methyl-3-aminopropyl-trimethoxysilan, 3-Aminopropyl-triethoxysilan, N-Aminoethyl-3-aminopropyl-methyl-dimethoxysilan, N-Aminoethyl-3-aminopropyl-trimethoxysilan, 3-Aminopropyl-methyl-diethoxysilan und 3-Aminopropyl-tris(2-methoxy-ethoxy-ethoxy)silan, epoxyfunktionelle Siloxane wie 3-Glycidyloxypropyl-trimethoxysilan, vinylisch ungesättigte Siloxane wie z.B. Vinyltrimethoxysilan, Vinyltriethoxysilan, Vinyl-tris(2-methoxy-ethoxy)silan und 3-Methacryloxypropyl-trimethoxysilan, mercaptofunktionelle Siloxane wie 3-Mercaptopropyl-trimethoxysilan, 3-Mercaptopropyl-methyldimethoxysilan und 3-Mercaptopropyl-triethoxysilan; weitere mögliche Siloxane sind 3-Chlorpropyl-trimethoxysilan, Vinyltrichlorsilan, triaminofunktionelles Propyltrimethoxysilan, 3-4,5-Dihydroimidazol-1-yl-propyltriethoxysilan und 3-Ureidopropyl-triethoxysilan.

Bei den erfindungsgemäßen Bindemittelzusammensetzungen handelt es sich um sogenannte Zweikomponenten-Systeme.

Bevorzugt werden die Komponenten A₁, A₂, B und C gemeinsam als Bindemittelkomponente 1 und die Komponenten D und E gemeinsam als Härterkomponente 2 gelagert. Je nach Funktionalität wird die Komponente F der Komponente 1 oder 2 zugegeben.

Dies bedeutet, daß die Komponenten 1 und 2 getrennt gelagert werden und erst vor der Anwendung bzw. zur Anwendung beispielsweise zur Herstellung von Überzugsmitteln vermischt werden. Die erfindungsgemäßen Bindemittelzusammensetzungen können in üblicher Weise zu Überzugsmitteln, beispielsweise Füllern formuliert werden. Dies erfolgt im allgemeinen durch Zusatz von Lösemitteln oder Wasser. Dabei ist es möglich, eine Mischung der Komponenten 1 und 2 zu bereiten und diese in üblicher Weise durch den Zusatz von Lösemitteln oder Wasser und üblichen Additiven zu Überzugsmitteln aufzuarbeiten. Es besteht jedoch auch die Möglichkeit zunächst eine der Komponenten 1 oder 2 durch Zusatz von Lösemitteln oder Wasser und üblichen Additiven aufzubereiten und dann die andere Komponente zuzusetzen.

Einen weiteren Gegenstand der Erfindung bilden somit Überzugsmittel, enthaltend die erfindungsgemäße Bindemittelzusammensetzung und darüber hinaus ein oder mehrere organische Lösemittel und/oder Wasser, sowie Pigmente und/oder Füllstoffe und gegebenenfalls lackübliche Zusatzstoffe.

Geeignete organische Lösemittel für die Herstellung von Überzugsmitteln, beispielsweise Lacken, sind solche, wie sie auch bei der Herstellung der Einzelkomponenten A₁, A₂, B und D verwendet werden können. Beispiele für derartige Lösemittel sind organische Lösemittel, wie aliphatische und aromatische Kohlenwasserstoffe, beispielsweise Toluol, Xylol, Gemische aliphatischer und/oder aromatischer Kohlenwasserstoffe, Ester, Ether und Alkohole. Es sind dies lackübliche Lösemittel. Zur Herstellung der Überzugsmittel aus den erfindungsgemäßen Bindemitteln können auch wäßrige Lösungen bereitet werden. Hierzu können gegebenenfalls geeignete Emulgatoren verwendet werden, wie sie auf dem Lacksektor üblich sind.

Zur Herstellung der Überzugsmittel können übliche Additive zugesetzt werden, wie sie beispielsweise auf dem Lacksektor üblich sind. Beispiele für solche Additive sind Pigmente, beispielsweise transparente oder deckende farbgebende Pigmente wie Titandioxid oder Ruß und Effektpigmente, wie Metallschuppenpigmente und/oder Perlglanzpigmente.

Die erfindungsgemäßen Bindemittelzusammensetzungen eignen sich besonders günstig für Überzugsmittel, die derartige Effektpigmente enthalten. Bevorzugt enthalten sie Effektpigmente zusammen mit transparenten farbgebenden Pigmenten oder deckende farbgebende Pigmente zusammen mit Füllstoffen.

Weitere Beispiele für Additive sind Füllstoffe, wie z.B. Talkum und Silikate; Weichmacher, Lichtschutzmittel, Stabilisatoren und Verlaufsmittel, wie Silikonöle.

Die aus den erfindungsgemäßen Bindemitteln hergestellten Überzugsmittel können auf die gewünschte Applikationsviskosität durch entsprechende Regelung des Zusatzes von Lösemitteln und/oder Additiven eingestellt werden.

Die Überzugsmittel können je nach Mengenverhältnis der Komponenten 1 zur Komponente 2, Äquivalentgewicht und Katalysatormenge beispielsweise auf Topfzeiten zwischen wenigen Sekunden und mehreren Stunden eingestellt werden.

Die Applikation der so hergestellten Überzugsmittel kann in üblicher Weise erfolgen, beispielsweise durch Tauchen, Spritzen, Streichen oder auf elektrostatischem Wege.

Die Aushärtung von aus den Überzugsmitteln erstellten Überzügen kann in einem weiten Temperaturbereich von beispielsweise -10°C bis 200°C erfolgen. Bevorzugt ist der Temperaturbereich von 5°C bis 80°C, z.B. 20°C bis 80°C, beispielsweise Raumtemperatur. Die Aushärtung kann durch energiereiche Strahlung unterstützt werden, beispielsweise durch Infrarotstrahlung oder UV-Strahlung.

Die aus den erfindungsgemäßen Bindemitteln hergestellten Überzugsmittel sind für Überzüge geeignet, die auf einer Vielzahl von Substraten haften, wie beispielsweise Holz, Textilien, Kunststoff, Glas, Keramik und insbesondere Metall. Die Überzugsmittel können auch im Mehrschichtverfahren eingesetzt werden. So können sie beispielsweise auf übliche Grundierungen, Basislacke, Füller oder auf bereits vorhandene Decklacke aufgetragen und auch überlackiert werden. Der Auftrag mehrerer Schichten kann beispielsweise auch unter der Verwendung der erfindungsgemäßen Überzugsmittel naß-in-naß und unter gemeinsamem Aushärten erfolgen.

Ein besonders bevorzugtes Anwendungsgebiet für die erfindungsgemäßen Bindemittel stellt die Bereitstellung von Überzugsmitteln für Lackierungen auf dem Gebiet des Kraftfahrzeugsektors dar. Durch die günstigen Härtungsbedingungen der aus den erfindungsgemäßen Bindemitteln hergestellten Überzugsmittel sind diese besonders auch für Kraftfahrzeug-Reparaturlackierungen geeignet.

Die vorliegende Erfindung betrifft somit auch Verfahren zur Herstellung von Überzügen auf verschiedenen Substraten, bei denen auf das Substrat ein aus den erfindungsgemäßen Bindemitteln hergestelltes Überzugsmittel appliziert wird, worauf getrocknet und gehärtet wird. Die Erfindung betrifft auch die Verwendung der erfindungsgemäßen Bindemittelzusammensetzungen in Spachtelmassen, Füllermassen oder Decklacken.

Gemäß einer bevorzugten Ausführungsform betrifft die Erfindung ein Verfahren zur Mehrschichtlackierung durch Aufbringen einer Füllerschicht auf ein zu lackierendes gegebenenfalls grundiertes Substrat, Auftrag einer Basislackschicht und gegebenenfalls einer Klarlackschicht, wobei die Schichten einzeln und/oder gemeinsam eingebrannt werden, dadurch gekennzeichnet, daß man zur Herstellung der Füllerschicht ein erfmdungsgemäßes Überzugsmittel verwendet.

Ein weiterer Gegenstand der Erfindung ist die Verwendung der erfindungsgemäßen Überzugsmittel zur Herstellung von Mehrschichtlackierungen.

In jedem Falle erhält man mit den aus den erfindungsgemäßen Bindemitteln hergestellten Überzugsmitteln Filme mit guter Härte und guter Wasser- und Lösemittelbeständigkeit, insbesondere Benzinbeständigkeit bei sehr guter Haftung. Die Aushärtung erfolgt sehr rasch; so ist beispielsweise eine Durchhärtung schon innerhalb weniger Minuten, wie etwa 5 Minuten, bei Raumtemperatur erzielbar, was z.B. besonders günstig für die Verwendung von Spachtelmassen und Füllermassen ist, die rasch geschliffen werden können.

Die folgenden Beispiele dienen zur Erläuterung der Erfindung. Alle Teile (T) und Prozentangaben (%) beziehen sich auf das Gewicht.

### Beispiel 1

1) Herstellung eines acetessigester-funktionalisierten Acrylats (Komponente A1)
   a) Herstellung des Acrylats 1a
      In einem 4-Liter-Dreihalskolben, der mit Rührer, Thermometer, Tropftrichter und Rückflußkühler versehen ist, werden 95 T Trimethylolpropan und 1100 T Acetessigester auf 130°C erhitzt. Binnen 5 Stunden wird ein Gemisch aus 75 T Butylacrylat, 115 T Hydroxyethylmethacrylat, 455 T Styrol, 85 T α-Methylstyrol-dimer und 35 T Trigonox 21 S kontinuierlich zudosiert. Anschließend wird mit 45 T Acetessigester das Monomerengefäß und der Tropftrichter nachgespült und das Ganze bei 130°C eine Stunde nachpolymerisiert. Danach werden 470 T propoxyliertes Bisphenol zugegeben und der Ansatz unter Abscheidung des freiwerdenden Lösemittels binnen 2 Stunden auf 180°C geheizt. Binnen weiteren 2 Stunden wird unter Vakuum das restliche Lösemittel bei 180°C abdestilliert. Nachdem der Ansatz auf 70°C abgekühlt wurde werden 45 T einer 4 %igen Hydrochinonlösung in Acetessigester und 1480 T Trimethylolpropantriacrylat (Komponente B) zugegeben. Es entsteht ein nahezu 100 %iges Harz mit einer Viskosität von ca. 1200 mPa.s.
   b) Herstellung des Vorprodukts zu Acrylat 1c
      In einem 1-Liter-Dreihalskolben, der mit Rührer, Thermometer und einem Abscheider versehen ist, werden 255 T Trimethylolpropan und 745 T Acetessigester unter Abscheidung des freiwerdenden Lösemittels Ethanol auf 180°C erhitzt. Nach erreichen der Temperatur wird Vakuum angelegt bis das gesamte Lösemittel abdestilliert ist. Das bei Raumtemperatur niedrigviskose Vorprodukt kann sofort weiterverarbeitet werden.
   c) Herstellung des Acrylats 1c
      In einem 4-Liter-Dreihalskolben, der mit Rührer, Thermometer, Tropftrichter und Rückflußkühler versehen ist, werden 550 T des "Vorprodukts zu Acrylat 1c" und 225 T Acetessigester bei eingesetztem Rückflußkühler auf 130°C erhitzt. Binnen 5 Stunden wird ein Gemisch aus 150 T Butylacrylat, 225 T Hydroxyethylmethacrylat, 900 T Styrol, 167 T α-Methylstyrol-dimer und 64 T Trigonox 21 S kontinuierlich zudosiert. Anschließend wird mit 64 T Acetessigester das Monomerengefäß und der Tropftrichter nachgespült und das Ganze bei 130°C eine Stunde nachpolymerisiert. Danach wird der Ansatz unter Abscheidung des freiwerdenden Lösemittels binnen 2 Stunden auf 180°C geheizt. Binnen weiteren 2 Stunden wird unter Vakuum das restliche Lösemittel bei 180°C abdestilliert. Nachdem der Ansatz auf 70°C abgekühlt wurde werden 85 T einer 4 %igen Hydrochinonlösung in Acetessigester und 1570 T Trimethylolpropantriacrylat (Komponente B) zugegeben. Es entsteht ein nahezu 100 %iges Harz mit einer Viskosität von ca. 7600 mPa.s.
2) Glycidylkomponente (Komponente C)
   Aromatisches Epoxidharz mit der Handelsbezeichnung Epikote^{R} 1001 der Firma Shell 50 %ig in Trimethylolpropantriacrylat
3) Polyaminkomponente (Komponente D)
   Handelsübliches cycloaliphatisches Amin, Aminzahl 235 bis 295 mg KOH/g, Viskosität 250 bis 500 mPa.s (Addukt aus Bisphenol A und Isophorondiamin).
4) Katalysator (Komponente E)
   Diazabicyclo (4.5.0)-undecen
5) Polysiloxankomponente (Komponente F)
   3-Aminopropyl-trimethoxysilan

### Herstellung von Spachtelmassen:

### Beispiel 2

I. Folgende Komponenten (A, B + C) werden miteinander vermischt und 2 Minuten dispergiert:
   31,6 T des acetessigesterfunktionalisierten Acrylats 1a
   5,3 T des Epikote 1001 50 %ig in Trimethylolpropantriacrylat (Komponente C)
   5,3 T Titandioxidpigment (Titan R 611)
   15,0 T Schwerspat
   42,8 T Talkum (Finntalc^{R} M 40)
II. Als Härterkomponente (D, E + F) werden gemischt:
   3,0 T eines handelsüblichen Addukts aus Bisphenol A mit Isophorondiamin (Komponente D)
   0,2 T Diazabicycloundecen (Komponente E)
   0,4 T Aminopropyltrimethoxysilan (Komponente F)
   0,4 T pyrogenes Siliciumdioxid (Aerosil^{R} 300)

Die beiden vermischten Komponenten I. und II. werden anschließend innig miteinander vermengt und können dann 10 Minuten verarbeitet werden.

Nach einer halben Stunde ist der Spachtel berührtrocken und nach einer Stunde schleifbar. Die Haftung auf entfettetem Stahlblech ist, getestet 48 Stunden nach Auftragung, sehr gut.

### Beispiel 3

I. Entspricht Beispiel 2
III. Als Härterkomponente (D + E) werden gemischt
   3,0 T eines handelsüblichen Addukts aus Bisphenol A mit Isophorondiamin (Komponente D)
   0,2 T Diazabicycloundecen (Komponente E)
   0,4 T pyrogenes Siliciumdioxid (Aerosil 300)

Die Verarbeitung der Komponenten I und III erfolgt wie bei Beispiel 2. Es zeigt sich jedoch, daß ohne die Siloxankomponente die Haftung nicht mehr ausreicht. Der Spachtel löst sich bei geringer Knick-Belastung vom Blech.

### Beispiel 4

IV. Folgende Komponenten werden miteinander vermischt und 2 Minuten dispergiert:
   31,6 T des acetessigesterfunktionalisierten Acrylats 1a (Komponente A,B)
   5,3 T Titandioxidpigment (Titan R 611)
   15,0 T Schwerspat
   42,8 T Talkum (Finntalc M 40)
II. Entspricht Beispiel 2
   Ohne die Glycidylkomponente C lassen sich die Pigmente in IV schlechter einarbeiten und dispergieren. Auch die Haftung der Spachtelmasse auf entfettetem Stahlblech wird negativ beeinflußt.

### Beispiel 5

Es wird wie in Beispiel 2 verfahren, wobei statt 31,6 T des Acrylats la die gleiche Menge des Acrylats 1b eingesetzt wird.

Auch diese Spachtelmasse läßt sich nach Vermischen der Komponenten I. und II. 10 Minuten lang verarbeiten und ist nach einer Stunde schleifbar. Ebenfalls ist die Haftung auf entfettetem Stahlblech nach 48 Stunden in Ordnung.

## Patentansprüche

1. Bindemittelzusammensetzung, enthaltend
A₁ 5 - 75 Gew.-% einer oder mehrerer C-H-acider Verbindungen, erhältlich durch radikalische Polymerisation von einem oder mehreren hydroxy- und nicht-hydroxyfunktionellen, ethylenisch ungesättigten Monomeren in Gegenwart von einem oder mehreren Polyolen, die gegebenenfalls teilweise oder ganz in mit einer oder mehreren β-Ketocarbonsäuren veresterter Form vorliegen können und einem oder mehreren aliphatischen β-Ketocarbonsäureestern und anschließender Umesterung der Hydroxygruppen des Polymerisats und der Polyole mit den enthaltenen aliphatischen β-Ketocarbonsäureestern,
A₂ 0 - 60 Gew.-% einer oder mehrerer C-H-aciden Verbindungen, erhältlich durch Umesterung eines oder mehrerer Polyole mit einem oder mehreren aliphatischen β-Ketocarbonsäureestern
B 5 - 75 Gew.-% einer oder mehrerer α,β-ungesättigter Verbindungen mit mindestens zwei Gruppen der allgemeinen Formel
R₁R₂C = CR₃-CO-,
die über den Rest eines zwei- oder mehrwertigen Alkohols, eines Di- oder Polyamins oder Aminoalkohols an mindestens eine weitere Gruppe R₁R₂C = CR₃-CO- gebunden ist, worin R₁, R₂ und R₃ unabhängig voneinander ein Wasserstoffatom und/oder ein gerader oder verzweigter Alkylrest mit 1 bis 10 Kohlenstoffatomen, der eine oder mehrere olefinische Unsättigungen und/oder eine oder mehrere Hydroxylgruppen aufweisen kann, sind,
C 2 - 40 Gew.-% einer oder mehrerer Polyglycidylverbindungen,
D 5 - 70 Gew.-% eines oder mehrerer Polyamine mit mindestens zwei Aminfunktionen, die primär und/oder sekundär sind und die verkappt sein können, im Molekül, als Härter und
E 0,01 - 10 Gew.-%, bezogen auf die Summe der Gewichte der Komponenten A₁, A₂, B, C, D und F, eines Katalysators in Form einer Lewis- oder Brönstedt-Base, wobei die konjugierten Säuren der letzteren einen pKA-Wert von mindestens 10 haben,
F 0,01 - 10 Gew.-% einer oder mehrerer Siloxanverbindungen der allgemeinen Formel
Y-(CH₂)₃-Si-X₃,
wobei
Y=-NH₂, 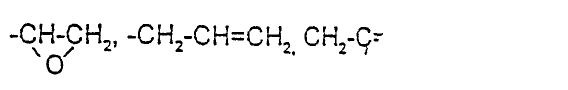
und
X=-OCH₃, -OCH₂CH₃, 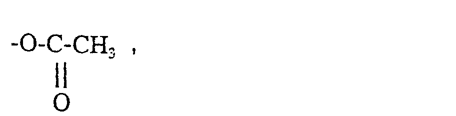
wobei mehrere Gruppen X gleich oder verschieden sein können.

2. Bindemittelzusammensetzung nach Anspruch 1, **dadurch gekennzeichnet, daß** das Polyol der Komponente A₁ ausgewählt ist aus
a) Polyolen aus der Gruppe von geraden, verzweigten oder cyclischen Alkan-di- und -polyolen mit 2 bis 30 Kohlenstoffatomen, wobei die Alkanreste durch ein oder mehrere Heteroatome und/oder einen oder mehrere aromatische Reste unterbrochen sein können,
b) hydroxylgruppenhaltigen Poly(meth)acrylaten oder Poly(meth)acrylamiden auf der Basis von (Meth(Meth)Acrylsäurehydroxyalkylestern oder (Meth)Acrylsäurehydroxyalkylamiden mit jeweils 2 bis 12 Kohlenstoffatomen im Alkylteil, gegebenenfalls copolymerisiert mit α,β-ungesättigten Monomeren, mit einem Zahlenmittel des Molekulargewichts (Mn) von 1000 bis 10000,
c) hydroxylgruppenhaltigen Poly(meth)acrylaten auf der Basis von (Meth)acrylsäurehydroxyalkylestern mit 2 bis 12 Kohlenstoffatomen im Alkylteil und gegebenenfalls copolymerisierbaren alpha,beta-ungesättigten Monomeren, die mit cyclischen Estern von Hydroxycarbonsäuren mit 4 bis 6 Kohlenstoffatomen modifiziert sind, mit einem Zahlenmittel des Molekulargewichts (Mn) von 1000 bis 10000 und
d) Polyester-Polyolen, Polyether-Polyolen und/oder Polyurethan-Polyolen jeweils mit einem Zahlenmittel des Molekulargewichts (Mn) von 200 bis 2000.

3. Bindemittelzusammensetzung nach Anspruch 1, **dadurch gekennzeichnet, daß** das Polyol der Komponente A₂ ausgewählt ist aus
a) Polyolen aus der Gruppe von geraden, verzweigten oder cyclischen Alkan-di- und -polyolen mit 2 bis 30 Kohlenstoffatomen, wobei die Alkanreste durch ein oder mehrere Heteroatome und/oder einen oder mehrere aromatische Reste unterbrochen sein können,
b) Polyester-Polyolen, Polyether-Polyolen und/oder Polyurethan-Polyolen, jeweils mit einem Zahlenmittel des Molekulargewichts (Mn) von 200 bis 2000.

4. Bindemittelzusammensetzung nach einem der Ansprüche 1, 2 oder 3, **dadurch gekennzeichnet, daß** sie in lösemittelfreier Form vorliegt.

5. Bindemittelzusammensetzung nach einem der Ansprüche 1, 2 oder 3, **dadurch gekennzeichnet, daß** sie in lösemittelhaltiger Form vorliegt.

6. Überzugsmittel, enthaltend die Bindemittelzusammensetzung nach einem der Ansprüche 1 bis 5 und darüber hinaus ein oder mehrere organische Lösemittel und/oder Wasser sowie Pigmente und/oder Füllstoffe und gegebenenfalls übliche Additive enthält.

7. Verfahren zur Mehrschichtlackierung durch Aufbringen einer Füllerschicht auf ein zu lackierendes gegebenenfalls grundiertes Substrat, Auftrag einer Basislackschicht und gegebenenfalls einer Klarlackschicht, wobei die Schichten einzeln und/oder gemeinsam eingebrannt werden, **dadurch gekennzeichnet, daß** man zur Herstellung der Füllerschicht ein Überzugsmittel gemäß Anspruch 6 verwendet.

8. Verwendung der Bindemittelzusammensetzung gemäß einem der Ansprüche 1 bis 5 zur Herstellung von Spachtelmassen oder Füllern.

9. Verwendung der Bindemittelzusammensetzung gemäß einem der Ansprüche 1 bis 5 zur Herstellung von bei Temperaturen von 5 bis 80°C härtbaren Überzugsmitteln.

10. Verwendung der Überzugsmittel nach Anspruch 6 zur Herstellung von Mehrschichtlackierungen.

11. Verwendung der Überzugsmittel nach Anspruch 6 zur Herstellung von Kraftfahrzeug-Serien- und -Reparaturlackierungen.

## Claims

1. Binder composition containing
A₁ 5-75 wt.% of one or more C-H-acidic compounds obtainable by radical polymerisation of one or more hydroxy- and non-hydroxy-functional, ethylenically unsaturated monomers in the presence of one or more polyols, which can optionally be partially or wholly esterified with one or more β-ketocarboxylic acids, and one or more aliphatic β-ketocarboxylic acid esters, with subsequent interesterification of the hydroxyl groups in the polymer and of the polyols with the aliphatic β-ketocarboxylic acid esters therein contained,
A₂ 0-60 wt.% of one or more C-H-acidic compounds obtainable by interesterification of one or more polyols with one or more aliphatic β-ketocarboxylic acid esters,
B 5-75 wt.% of one or more α,β-unsaturated compounds with at least two groups having the general formula
R₁R₂C = CR₃-CO-,
which is bonded by means of the radical of a dihydric or polyhydric alcohol, a diamine or polyamine or amino alcohol to at least one further R₁R₂C = CR₃-CO- group, wherein R₁, R₂ and R₃ are mutually independently a hydrogen atom and/or a straight or branched alkyl radical with 1 to 10 carbon atoms, which can exhibit one or more olefinic unsaturations and/or one or more hydroxyl groups,
C 2-40 wt.% of one or more polyglycidyl compounds,
D 5-70 wt.% of one or more polyamines with at least two amine functions, which are primary and/or secondary and can be capped, in the molecule, as hardener and
E 0.01-10 wt.%, relative to the sum of the weights of components A₁, A₂, B, C, D and F, of a catalyst in the form of a Lewis or Brønsted base, whereby the conjugated acids of the latter have a pKA value of at least 10,
F 0.01-10 wt.% of one or more siloxane compounds having the general formula
Y-(CH₂)₃-Si-X₃,
where
Y = -NH₂, 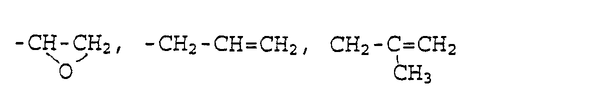
and
X = -OCH₃, -OCH₂CH₃, 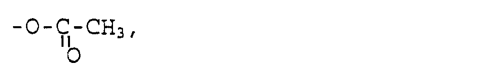
whereby multiple groups X can be the same or different.

2. Binder composition according to claim 1, **characterised in that** the polyol in component A₁ is selected from
a) polyols from the group of straight, branched or cyclic alkane diols and polyols with 2 to 30 carbon atoms, whereby the alkane radicals can be interrupted by one or more heteroatoms and/or one or more aromatic radicals.
b) hydroxyl group-containing poly(meth)acrylates or poly(meth)acrylamides based on (meth)acrylic acid hydroxyalkyl esters or (meth)acrylic acid hydroxyalkylamides, each having 2 to 12 carbon atoms in the alkyl part, optionally copolymerised with α,β-unsaturated monomers, having a number average molecular weight (Mn) of 1000 to 10000,
c) hydroxyl group-containing poly(meth)acrylates based on (meth)acrylic acid hydroxyalkyl esters having 2 to 12 carbon atoms in the alkyl part and optionally copolymerisable alpha,beta-unsaturated monomers modified with cyclic esters of hydroxycarboxylic acids having 4 to 6 carbon atoms, having a number average molecular weight (Mn) of 1000 to 10000, and
d) polyester polyols, polyether polyols and/or polyurethane polyols, each having a number average molecular weight (Mn) of 200 to 2000.

3. Binder composition according to claim 1, **characterised in that** the polyol in component A₂ is selected from
a) polyols from the group of straight, branched or cyclic alkane diols and polyols with 2 to 30 carbon atoms, whereby the alkane radicals can be interrupted by one or more heteroatoms and/or one or more aromatic radicals.
b) polyester polyols, polyether polyols and/or polyurethane polyols, each having a number average molecular weight (Mn) of 200 to 2000.

4. Binder composition according to one of claims 1, 2 or 3, **characterised in that** it is in solvent-free form.

5. Binder composition according to one of claims 1, 2 or 3, **characterised in that** it is in solvent-containing form.

6. Coating compound containing the binder composition according to one of claims 1 to 5 and additionally containing one or more organic solvents and/or water as well as pigments and/or fillers and optionally conventional additives.

7. Process for multi-coat lacquering by application of a filler coat to a substrate to be lacquered, which has optionally been primed, application of a coat of base lacquer and optionally a coat of clear lacquer, whereby the coats are stoved separately and/or together, **characterised in that** a coating compound according to claim 6 is used to prepare the filler coat.

8. Use of the binder composition according to one of claims 1 to 5 to prepare stoppers or fillers.

9. Use of the binder composition according to one of claims 1 to 5 to prepare coating compounds that can be cured at temperatures of 5 to 80°C.

10. Use of the coating compounds according to claim 6 to produce multi-coat lacquers.

11. Use of the coating compounds according to claim 6 to produce automotive standard production and refinishing lacquers.

## Revendications

1. Composition de liant, contenant
A₁ de 5 à 75 % en poids d'un ou plusieurs composés CH-acides, pouvant être obtenus par polymérisation radicalaire d'un ou plusieurs monomères hydroxylés et non-hydroxylés, à insaturation éthylénique, en présence d'un ou plusieurs polyols, qui peuvent éventuellement se présenter en totalité ou en partie sous une forme estérifiée par un ou plusieurs acides β-cétocarboxyliques, et d'un ou plusieurs esters aliphatiques d'acides β-cétocarboxyliques, puis transestérification des groupes hydroxy du polymère et des polyols avec les esters aliphatiques d'acides β-cétocarboxyliques présents,
A₂ de 0 à 60 % en poids d'un ou plusieurs composés CH-acides, pouvant être obtenus par transestérification d'un ou plusieurs polyols, avec un ou plusieurs esters aliphatiques d'acides β-cétocarboxyliques,
B de 5 à 75 % d'un ou plusieurs composés α,β-insaturés, ayant au moins deux groupes de formule générale
R₁R₂C = CR₃-CO-,
qui, par l'intermédiaire du résidu d'un dialcool ou d'un polyalcool, d'une diamine ou d'une polyamine ou d'un amino-alcool, sont liés à au moins un autre groupe R₁R₂C = CR₃-CO-, où R₁, R₂ et R₃ représentent chacun indépendamment de l'autre un atome d'hydrogène et/ou un radical alkyle à chaîne droite ou ramifiée ayant de 1 à 10 atomes de carbone, qui peut comporter une ou plusieurs insaturations oléfiniques et/ou un ou plusieurs groupes hydroxyle,
C de 2 à 40 % d'un ou plusieurs composés polyglycidylés,
D de 5 à 70 % en poids d'une ou plusieurs polyamines ayant dans leur molécule au moins deux fonctions amine, qui sont primaires et/ou secondaires et peuvent être coiffées, et servant de durcisseur, et
E de 0,01 à 10 % en poids, par rapport au poids des composants A₁, A₂, B, C, D et F, d'un catalyseur sous forme d'une base de Lewis ou de Brönstedt, les acides conjugués de ces dernières ayant un pKA d'au moins 10,
F de 0,01 à 10 % en poids d'un ou plusieurs composés siloxanes de formule générale
Y-(CH₂)₃-Si-X₃
où
Y = -NH₂, 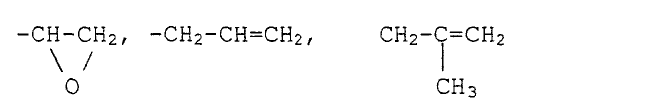
et
X = -OCH₃, -OCH₂CH_{3,} 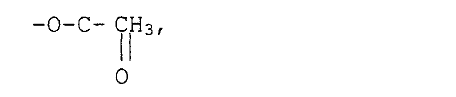
où plusieurs groupes X peuvent être identiques ou différents.

2. Composition de liant selon la revendication 1, **caractérisée en ce que** le polyol du composant A₂ est choisi parmi les composés suivants :
a) les polyols de l'ensemble comprenant les alcane-di- et -polyols à chaîne droite ou ramifiée ou cycliques ayant de 2 à 30 atomes de carbone, les résidus alcanes pouvant être interrompus par un ou plusieurs hétéroatomes et/ou un ou plusieurs radicaux aromatiques,
b) les poly(méth)acrylates ou poly(méth)acrylamides hydroxylés à base de (méth)acrylates d'hydroxyalkyle ou de (méth)acrylohydroxyalkylamides ayant chacun de 2 à 12 atomes de carbone dans la partie alkyle, éventuellement copolymérisés avec des monomères α,β-insaturés, et ayant une masse moléculaire moyenne en nombre (Mn) de 1000 à 10 000,
c) les poly(méth)acrylates hydroxylés à base de (méth)-acrylates d'hydroxyalkyle ayant de 2 à 12 atomes de carbone dans la partie alkyle et de monomères α,β-insaturés éventuellement copolymérisables, qui sont modifiés par des esters cycliques d'acides hydroxycarboxyliques ayant de 4 à 6 atomes de carbone, et ayant une masse moléculaire moyenne en nombre (Mn) de 1000 à 10 000, et
d) les polyester-polyols, les polyéther-polyols et/ou les polyuréthanne-polyols ayant chacun une masse moléculaire moyenne en nombre (Mn) de 200 à 2000, par exemple de 500 à 2000.

3. Composition de liant selon la revendication 1, **caractérisée en ce que** le polyol du composant A₂ est choisi parmi
a) les polyols de l'ensemble comprenant les alcane-di- et -polyols à chaîne droite ou ramifiée ou cycliques ayant de 2 à 30 atomes de carbone, les résidus alcanes pouvant être interrompus par un ou plusieurs hétéroatomes et/ou un ou plusieurs radicaux aromatiques,
b) les polyester-polyols, les polyéther-polyols et/ou les polyuréthanne-polyols ayant chacun une masse moléculaire moyenne en nombre (Mn) de 200 à 2000.

4. Composition de liant selon l'une des revendications 1, 2 ou 3, **caractérisée en ce qu'**elle se présente sous une forme sans solvant.

5. Composition de liant selon l'une des revendications 1, 2 ou 3, **caractérisée en ce qu'**elle se présente sous une forme contenant des solvants.

6. Produit de revêtement contenant la composition de liant selon l'une des revendications 1 à 5 et de plus un ou plusieurs solvants organiques et/ou de l'eau, ainsi que des pigments et/ou des matières de charge, et éventuellement des additifs usuels.

7. Procédé d'application d'une peinture multicouche, par application d'une couche d'un apprêt garnissant sur un subjectile à peindre, ayant éventuellement reçu une couche de fond, application d'une couche d'un vernis de base et éventuellement d'une couche d'un vernis transparent, les couches étant cuites d'une manière individuelle et/ou simultanée, **caractérisé en ce qu'**on utilise pour fabriquer la couche d'apprêt garnissant un produit de revêtement selon la revendication 6.

8. Utilisation de la composition de liant selon l'une des revendications 1 à 5 pour fabriquer des masses à spatuler ou des apprêts garnissants.

9. Utilisation de la composition de liant selon l'une des revendications 1 à 5 pour fabriquer des produits de revêtement pouvant durcir à des températures de 5 à 80°C.

10. Utilisation des produits de revêtement selon la revendication 6 pour fabriquer des peintures multicouches.

11. Utilisation des produits de revêtement selon la revendication 6 pour fabriquer des peintures de première monte ou des peintures de retouche pour carrosseries de véhicules à moteur.
